# EUROPEAN PATENT SPECIFICATION

(11) **EP 4 046 917 B1**
(45) Date of publication and mention of the grant of the patent: **05.04.2023**
(21) Application number: 21382143.2
(22) Date of filing: 23.02.2021
(51) Int. Cl.: B65B 7/16, B29C 65/00, B65B 31/02, B65B 51/14, B65B 59/00

(54) **PACKAGING MACHINE WITH EXCHANGEABLE UPPER SEALING TOOL**
VERPACKUNGSMASCHINE MIT AUSTAUSCHBAREM OBEREM SIEGELWERKZEUG
MACHINE D'EMBALLAGE COMPRENANT UN OUTIL D'ÉTANCHÉITÉ SUPÉRIEUR ÉCHANGEABLE

(43) Date of publication of application: 24.08.2022
(73) Proprietor: MULTIVAC Sepp Haggenmüller SE & Co. KG, 87787 Wolfertschwenden (DE)
(72) Inventor: Vives Escribà, Neus, 08396 Sant Cebrià de Vallalta (ES)
(74) Representative: Grünecker Patent- und Rechtsanwälte PartG mbB

(56) References cited:
- IT-A1- UB20 155 300
- KR-B1- 101 197 914
- US-A1- 2013 263 559
- US-A1- 2017 305 586

## Description

The present invention refers to a packaging machine comprising a sealing station according to claim 1. In addition, the invention refers to a method for evacuating and/or gassing a sealing chamber of a sealing station according to claim 14.

IT UB20 155 300 A1 and US 2017/305586 A1 both disclose tray sealer machines with a sealing station that can be equipped with an exchangeable sealing tool.

DE 10 2004 051 923 A1 discloses a sealing station that is provided at a packaging machine. The sealing station comprises a sealing tool with an upper sealing tool that can be exchanged from the sealing station. Mounting the upper sealing tool inside the sealing station occurs from above, i.e. by mounting protrusions that are formed at a top side of the upper tool. The top side mounting makes it difficult to use at the sealing station upper sealing tools that have differently sized heights. Especially, this would make the lower side of differently sized upper sealing tools varying between different heights above the lower sealing tool, and therefore would require adaptions with respect to the lifting stroke of the lower tool and/or different lower tool designs. Additionally, with respect to gassing and/or evacuating connections, which are foreseen for the upper tool inside the sealing station at predetermined locations, it is challenging to connect them with differently sized tools.

Further, in practice customers desire sealing stations that can be used for producing packages for differently sized products. Thus, the sealing station should be compatible with several sized sealing tools. However, it is difficult to construct the sealing station such that differently sized sealing tools can be used exchangeably without problems, as normally connections for evacuation and/or gassing have a predetermined location inside the sealing station.

It is the object of the present invention to provide a packaging machine with a sealing station and an upper sealing tool with a design that provides the potential for being a kind of standard that enables differently sized tools having such standard to be used with the sealing station more efficiently. Further, it is the object of the present invention to provide a method for evacuating and/or gassing a sealing chamber that can be conducted with differently sized upper sealing tools in a more standardized, cost efficient manner.

This object can be solved with a packaging machine according to claim 1, and with a method for evacuating and/or gassing according to claim 14. The invention provides improved embodiments by the subject matter of the dependent claims.

The invention provides a packaging machine comprising a sealing station with a sealing tool that comprises a first upper tool that can be selectively mounted at the sealing station and removed from the sealing station, respectively. The first upper tool comprises at least one mounting ledge that is configured for being coupled at a holding device of the sealing station in order to functionally position the first upper tool inside the sealing station. By coupling the mounting ledge of the first upper tool with the holding device of the sealing station the upper tool can be mounted inside the sealing station at a predetermined position in which the tool is ready for use.

According to the invention, the mounting ledge comprises at least one evacuation and/or gassing connection. Therefore, the mounting ledge provides for a technical double function, firstly, it is used for supporting the first upper tool inside the sealing station at the holding device of the sealing station, and secondly it is used for the evacuating and/or gassing process.

The first upper tool's mounting ledge integrally providing the evacuation and/or gassing connection has the great potential forming a standard platform for differently sized upper tools as thereby the main body can be constructed more easily with different heights. Especially, regarding different customer requirements with respect to packaging several product sizes, an upper sealing tool series having a standard platform with the inventive mounting ledge may provide a sustainable tool program that is compatible with the sealing station independent of the individual size of each tool of that series.

In other terms, according to the present invention, the upper tool is made with a lower mounting section, i.e. lower platform, which has a high standardized design by combining the mounting ledge and the process related connection, thus more allowing a varying design setup for the upper tool's upper structure, e.g. regarding the upper tool's height and/or volume. Therefore, according to the invention the lower platform has a fix standard design while the above setup is variable regarding its height and/or volume. As a result, the mounting arrangements inside the sealing station for carrying the upper tool can also be designed with a higher standardized design that makes the sealing station better compatible with differently sized upper tools.

According to the invention, the mounting ledge is formed as a rail along a lateral side of the first upper tool. Such a rail-formed mounting ledge makes it easy to mount the first upper tool in a predetermined position within a mounting plane inside the sealing station. Further, the rail-shaped mounting ledge provides a suitable size for integrally providing the evacuation and/or gassing connection.

According to a variant of the invention, the mounting ledge is formed on a rear side of the first upper tool, the rear side opposing a front side of the first upper tool, which faces a technician or an assembly device, e.g. a lifting apparatus. Such mounting ledge can be manufactured easily and may support the technician for correctly placing the first upper tool inside the sealing station.

It is conceivable that the holding device comprises an evacuation and/or gassing connection for the evacuation and/or gassing connection that is formed at the mounting ledge. Both of these connections can be fluidly connected via the mounting ledge and the holding device for the mounting ledge. Thus, inside the sealing station the evacuation and/or gassing connection can be established through the coupling arrangements that are used for fixing the first upper tool. Thus, mounting and operating fluid connections are provided in close distance with respect to each other, and thereby forming a standardized module, which allows the rest of the tool having a greater design variability.

Especially, both evacuation and/or gassing connections may be configured for establishing a push-in connection. This enables a very easy to mount structure, cost-efficient design and makes it easy for the technician mounting the first upper tool correctly inside the sealing station.

According to one embodiment, the first upper tool comprises lateral guide rails, which are coupled for mounting the first upper tool inside the sealing station at holding devices that are provided inside the sealing station. The holding devices may each have a crawl type holder, which face the lateral guide rails. The lateral guide rails enable an easy mounting of the first upper tool inside the sealing station, wherein it is possible for the technician to push the first upper tool along the lateral guide rails into the sealing station such that the mounting ledge will be placed precisely for being connected with its evacuation and/or gassing connection. When being mounting inside the sealing station, the first upper tool's lateral guide rails may be arranged transversely to a working direction of the packaging machine.

Preferably, the lateral guide rails are each formed as rails along opposing lateral sides of the first upper tool. The lateral guide rails provide a great mounting aid for the technician and allow a robust positioning of the first upper tool inside the sealing station. The lateral guide rails may essentially extend along the completely lateral sides.

According to a purposeful embodiment, the lateral guide rails are integrally formed with the mounting ledge with their ends running towards the mounting ledge. This may form a very robust flange around three lateral sides of the first upper tool for stably mounting the same.

It would be possible that the mounting ledge and the lateral guide rails are circumferentially formed along different lateral sides of the first upper tool. This enables a multifunctional standardized platform for mounting, guiding and fluid connection. In addition, such multifunctional platform can be perfectly used as a standard basis for various tool designs, e.g. a flat and a high tool design.

Preferably, the mounting ledge and the lateral guide rails essentially form a U-shaped mounting ledge at the first upper tool. Such U-shaped protrusion running along three lateral sides of the first upper tool can be manufactured easily and gives an integral compact design to the tooling platform regarding its mounting and fluid connection.

It would be conceivable that one of the lateral guide rails forms the mounting ledge. Thereby, it would be possible to reduce the overall material used for the tool construction, and thus potentially lowering manufacturing costs. It would be possible that the evacuation and/or gassing connection of the mounting ledge will be positioned exactly for establishing a fluid connection with the machine side located evacuation and/or gassing connection when the lateral guide rail is moved horizontally in a predetermined mounting position inside the sealing station.

Preferably, the sealing tool comprises a second upper tool that can be selectively mounted at the sealing station and removed from the sealing station, respectively, instead of the first upper tool, wherein the second upper tool comprises at least one mounting ledge that can be coupled with the holding device of the sealing station in order to functionally position the second upper tool inside the sealing station. The mounting ledge of the second upper tool and the mounting ledge of the first upper tool are identical with respect to one another. Therefore, mounting of the first and the second upper tools inside the sealing station is the same procedure at the same place, such that a higher tool standard can be reached. In other terms, the first upper tool and the second upper tool each provide the same mounting platform incorporating the fluid connection such that the rest of their bodies may greater differ with respect to one another, e.g. regarding their heights.

It would be possible that the first upper tool and the second upper tool comprise different construction heights with respect to each other. Nevertheless, both of the first upper tool and the second upper tool can be mounted inside the sealing station by their standardized mounting ledges in the same manner.

Preferably, the packaging machine is provided as a tray sealer or as a thermal deep-drawing machine. For an even higher standard, it would be conceivable, that the first and second upper tools are both suitable for being mounted exchangeably at the sealing station of the tray sealer as well as at the sealing station of the thermal deep-drawing machine.

The invention also refers to a method for evacuating and/or gassing a hermetically sealed sealing chamber that is formed at a sealing station of a packaging machine by means of a sealing tool of the sealing station. The method provides that the evacuating and/or gassing of the sealing chamber is conducted via an evacuation and/or gassing connection that is provided at a mounting ledge of a first upper tool of the sealing tool.

This allows that the kind of mounting, as well as evacuating and/or gassing, becomes more standardized thanks to the mounting ledge that combines these functions, while the rest of the upper tool structure can be easily adapted for differently sized products according to special customer requirements.

In the following, embodiments of the present invention are explained in more detail referring to the figures in which:
- Fig. 1: shows a deep-drawing packaging machine,
- Fig. 2: shows a tray sealer,
- Fig. 3A: shows an arrangement for holding a first upper tool having a first design,
- Fig. 3B: shows an arrangement for holding a second upper tool having a second design, and
- Fig. 4: shows a schematic inventive tooling concept for an upper tool of a sealing station.

Identical components are designated with the same reference numerals throughout the figures.

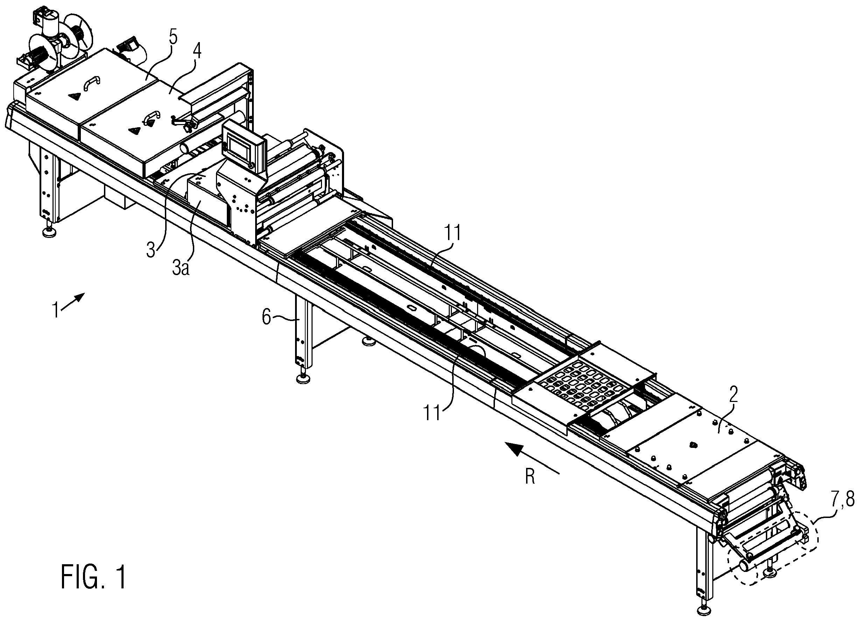

Fig. 1 shows an intermittently operating deep-drawing (or thermoforming) packaging machine 1. The deep-drawing packaging machine 1 comprises a forming station 2, a sealing station 3, a transverse cutting device 4 and a longitudinal cutting device 5, which are arranged in this order in a working direction R on a machine frame 6. A material roller 7 from which a lower film 8 can be drawn is located at the machine entrance of the deep-drawing packaging machine 1. The deep-drawing packaging machine 1 comprises a transportation chain 11, which holds the lower film 8 and carries the same in the working direction R per machine cycle.

The forming station 2 of Fig. 1 is configured as a deep-drawing station by which the lower film 8 can be deep-drawn, e.g. by pressurized air and/or vacuumization.

The sealing station 3 can form a hermetically sealed sealing chamber 3a in which a preferred atmosphere by evacuating and/or gassing the sealing chamber 3a can be created before sealing.

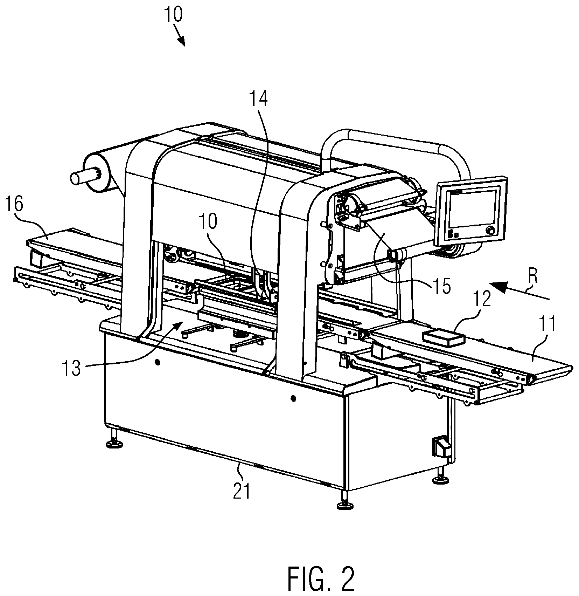

Fig. 2 shows, as another embodiment of packaging machine, a tray sealer 10 with a first conveyor 11 that transports trays 12 to a sealing station 13. The tray sealer 10 comprises a gripper device 14 for picking up the trays 12 on the first conveyor 11 and transporting them into the sealing station 13. Inside the sealing station 13, the trays 12 are sealed with a lid film 15 after a predetermined atmosphere has been created inside the trays 12. After being sealed inside the sealing station 13, the sealed trays 12 are picked up again by the gripper device 14 and lifted onto a second conveyor 16.

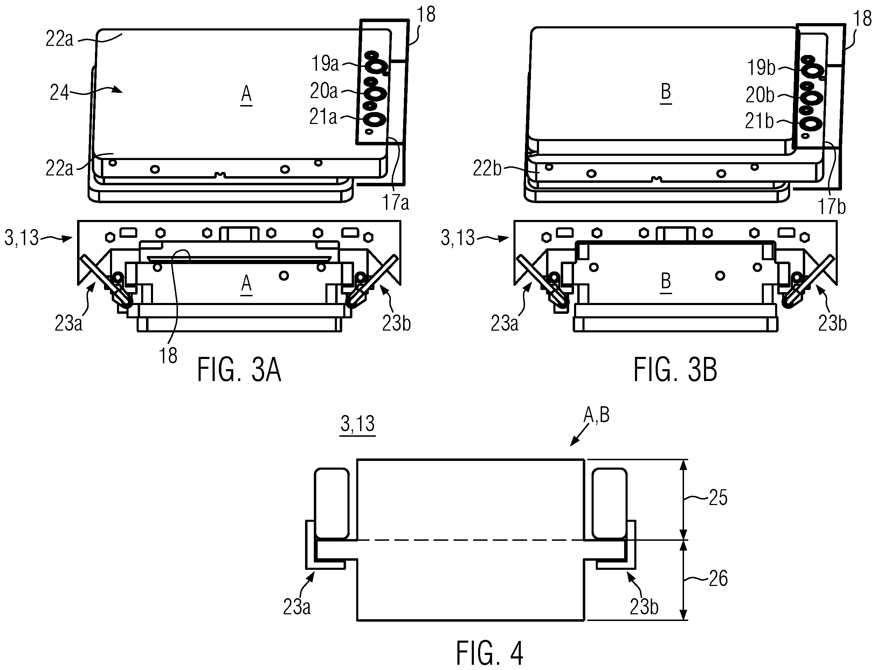

Fig. 3A shows a perspective view of a first upper tool A and its mounting inside a sealing station, such as the sealing station 3 of Fig. 1 and/or the sealing station 13 of Fig. 2. The first upper tool A comprises a mounting ledge 17a, which is configured for being coupled at a schematically shown holding device 18 of the sealing station 3, 13 in order to functionally position the first upper tool A inside the sealing station 3, 13 for installing a fluid connection.

Fig. 3A also shows that the mounting ledge 17a comprises an evacuation connection 19a, a gassing connection 20a and a cooling water connection 21a. These connections 19a, 20a, 21a are provided as ports for installing the fluid connection when the first upper tool A is mounted inside the sealing station 3, 13. Although not shown, the holding device 18 comprises thereto-corresponding connections, i.e. ports, for functionally conducting an evacuation and/or gassing process, as well as providing cooling water at the first upper tool A via such ports.

In addition, Fig. 3A shows that the first upper tool A comprises lateral guide rails 22a, 22b, which are used for mounting the first upper tool A inside the sealing station 3, 13 at therein provided holding devices 23a, 23b. According to Fig. 3A, especially in view of the lower part illustrated therein showing the arrangement of the first upper tool A being mounted at the holding devices 23a, 23b, the mounting ledge 17a is opposite of the front, thus not being shown. Thus, with respect to Fig. 3A, the mounting ledge 17a is provided at the rear side of the first upper tool A.

Further, as shown in Fig. 3A, the first upper tool A has a flat design. Thus, the mounting ledge 17a, as well as the guide rails 22a, 22b, together form with a top side of the first upper tool A an even plate 24. Consequently, the top plate 24 integrally forms the guide rails 22a, as well as the mounting ledge 17a.

Fig. 3B shows a second upper tool B having a bigger design compared to the first upper tool A shown in Fig. 3A. Especially, the second upper tool B is higher than the first upper tool A.

The second upper tool B comprises a mounting ledge 17b having an evacuation connection 19b, a gassing connection 20b, and a cooling water connection 21b that are provided as ports along the mounting ledge 17b. The mounting ledge 17b is configured for being arranged at the holding device 18, which can also be used for fixing the first upper tool A inside the sealing station 3, 13.

The second upper tool B has a guide rail 22b laterally formed thereto. Such a guide rail 22b is also formed on the opposite lateral side of the second upper tool B.

As shown in the lower part of Fig. 3B, the second upper tool B can also be carried inside the sealing station 3, 13 by means of the same holding devices 23a, 23b, which are used for mounting the first upper tool A.

Fig. 3A and Fig. 3B illustrate that the first upper tool A and the second upper tool B, while having a differently designed shape, each provide the same mounting structure, such that their arrangement inside the sealing station 3, 13 becomes highly standardized. This is specifically illustrated by showing in Figs. 3A and 3B that the holding devices 23a, 23b are configured for holding both the first upper tool A and the second upper tool B without the necessity of adapting the connections regarding evacuation, gassing, and cooling water.

Fig. 4 shows the general inventive concept already illustrated by Figs. 3A and 3B. According to Fig. 4, the first/second upper tools A, B can both be mounted inside the sealing station 3, 13 by means of the holding devices 23a, 23b, respectively. According to the invention, it is possible to provide the first/second upper tools A, B with an adaptably designed upper part 25, which enables variable design heights regarding different products being processed by the first/second upper tools A, B.

In addition, Fig. 4 shows that the first/second upper tools A, B have a lower part 26, i.e. a standardized platform, including the mounting ledge 17a, 17b, as well as the guide rails 22a, 22b. The lower part 26 having a fixed standard design, such that the lower part 26 can be mounted at several sealing stations 3, 13, too.

## Claims

1. Packaging machine (1, 10) comprising a sealing station (3, 13) with a sealing tool which comprises a first upper tool (A) that can be selectively mounted at the sealing station (3, 13) and removed from the sealing station (3, 13), respectively, wherein the first upper tool (A) comprises at least one mounting ledge (17a) which is configured for being coupled at a holding device (18) of the sealing station (3, 13) in order to functionally position the first upper tool (A) inside the sealing station (3, 13), wherein the mounting ledge (17a) comprises at least one evacuation and/or gassing connection (19a, 20a) **characterized in that** the mounting ledge (17a) is formed as a rail along a lateral side of the first upper tool (A).

2. Packaging machine according to claim 1, **characterized in that** the mounting ledge (17a) is formed on a rear side of the first upper tool (A), the rear side opposing a front side of the first upper tool, which faces a technician or an assembly device.

3. Packaging machine according to one of the previous claims, **characterized in that** the holding device (18) comprises an evacuation and/or gassing connection for the evacuation and/or gassing connection (19a, 20a) that is formed at the mounting ledge (17a).

4. Packaging machine according to one of the previous claims, **characterized in that** the first upper tool (A) comprises lateral guide rails (22a), which are coupled, for mounting the first upper tool (A) inside the sealing station (3, 13), holding devices (23a, 23b) that are provided inside the sealing station (3, 13), respectively.

5. Packaging machine according to claim 4, **characterized in that** the lateral guide rails (22a) are each formed along opposing lateral sides of the first upper tool (A).

6. Packaging machine according to claim 4 or claim 5, **characterized in that** the lateral guide rails (22a) are integrally formed with the mounting ledge (18) with their ends running towards the mounting ledge (17a).

7. Packaging machine according to one of claims 4 to 6, **characterized in that** the mounting ledge (17a) and the lateral guide rails (22a) are circumferentially formed along different lateral sides of the first upper tool (A).

8. Packaging machine according to claim 7, **characterized in that** the mounting ledge (17a) and the lateral guide rails (22a) essentially form a U-shaped mounting ledge at the first upper tool (A).

9. Packaging machine according to claim 4, **characterized in that** one of the lateral guide rails (22a) forms the mounting ledge (17a).

10. Packaging machine according to one of the previous claims, **characterized in that** the mounting ledge (17a) comprises at least one cooling water connection (21a).

11. Packaging machine according to one of the previous claims, **characterized in that** the sealing tool comprises a second upper tool (B) which can be selectively mounted at the sealing station (3, 13) and removed from the sealing station (3, 13), respectively, instead of the first upper tool (A), wherein the second upper tool (B) comprises at least one mounting ledge (17b) which can be coupled with the holding device (18) of the sealing station (3, 13) in order to functionally position the second upper tool (B) inside the sealing station (3, 13), and wherein the mounting ledge (17b) of the second upper tool (B) and the mounting ledge (17a) of the first upper tool (A) are identical with respect to one another.

12. Packaging machine according to claim 11, **characterized in that** the first upper tool (A) and the second upper tool (B) comprise different construction heights with respect to each other.

13. Packaging machine according to one of the previous claims, **characterized in that** the packaging machine is provided as a tray sealer (10) or in the form of a thermal deep-drawing machine (1).

14. Method for evacuating and/or gassing a hermetically sealed sealing chamber (3a) that is established at a sealing station (3, 13) of a packaging machine (1, 10) by means of a sealing tool of the sealing station (3, 13), **characterized in that** the evacuating and/or gassing of the sealing chamber (3a) is conducted via an evacuation and/or gassing connection (19a, 20a) that is formed at a mounting ledge (17a) being formed as a rail along a lateral side of a first upper tool (A) of the sealing tool.

## Patentansprüche

1. Verpackungsmaschine (1, 10), umfassend eine Siegelstation (3, 13) mit einem Siegelwerkzeug, das ein erstes Werkzeugoberteil (A) aufweist, welches an der Siegelstation (3, 13) wahlweise ein- und ausbaubar ist, wobei das erste Werkzeugoberteil (A) mindestens einen Montagevorsprung (17a) aufweist, der mit einer an der Siegelstation (3, 13) ausgebildeten Halterung (18) koppelbar ist, um das erste Werkzeugoberteil (A) innerhalb der Siegelstation (3, 13) funktionsbereit zu lagern, wobei der Montagevorsprung (17a) mindestens einen Evakuierungs- und/oder Begasungsanschluss (19a, 20a) aufweist, **dadurch gekennzeichnet, dass** der Montagevorsprung (17a) in Form einer Schiene entlang einer Außenseite des ersten Werkzeugoberteils (A) ausgebildet ist.

2. Verpackungsmaschine nach Anspruch 1, **dadurch gekennzeichnet, dass** der Montagevorsprung (17a) hinsichtlich einer einem Monteur oder einer Montageeinrichtung zugewandten Vorderseite des ersten Werkzeugoberteils (A) an einer dazu abgewandten Rückseite des ersten Werkzeugoberteils (A) ausgebildet ist.

3. Verpackungsmaschine nach einem der vorangehenden Ansprüche, **dadurch gekennzeichnet, dass** die Halterung (18) für den am Montagevorsprung (17a) ausgebildeten Evakuierungs- und/oder Begasungsanschluss (19a, 20a) einen damit verbindbaren Evakuierungs- und/oder Begasungsanschluss umfasst.

4. Verpackungsmaschine nach einem der vorangehenden Ansprüche, **dadurch gekennzeichnet, dass** das erste Werkzeugoberteil (A) seitliche Führungen (22a) aufweist, die zum Einbau des ersten Werkzeugoberteils (A) mittels an der Siegelstation (3, 13) ausgebildeten Halterungen (23a, 23b) koppelbar sind.

5. Verpackungsmaschine nach Anspruch 4, **dadurch gekennzeichnet, dass** die seitlichen Führungen (22a) jeweils in Form einer Schiene entlang gegenüberliegenden Außenseiten des ersten Werkzeugoberteils (A) ausgebildet sind.

6. Verpackungsmaschine nach Anspruch 4 oder 5, **dadurch gekennzeichnet, dass** die seitlichen Führungen (22a) mit ihren zum Montagevorsprung (17a) zulaufenden Enden integral mit dem Montagevorsprung (17a) ausgebildet sind.

7. Verpackungsmaschine nach einem der Ansprüche 4 bis 6, **dadurch gekennzeichnet, dass** der Montagevorsprung (17a) und die seitlichen Führungen (22a) umfangseitig an verschiedenen Außenseiten des ersten Werkzeugoberteils (A) ausgebildet sind.

8. Verpackungsmaschine nach Anspruch 7, **dadurch gekennzeichnet, dass** der Montagevorsprung (17a) und die seitlichen Führungen (22a) im Wesentlichen einen U-förmigen Montagevorsprung am ersten Werkzeugoberteil (A) ausbilden.

9. Verpackungsmaschine nach Anspruch 4, **dadurch gekennzeichnet, dass** eine der seitlichen Führungen (22a) den Montagevorsprung (17a) ausbildet.

10. Verpackungsmaschine nach einem der vorangehenden Ansprüche, **dadurch gekennzeichnet, dass** der Montagevorsprung (17a) mindestens einen Kühlwasseranschluss (21a) aufweist.

11. Verpackungsmaschine nach einem der vorangehenden Ansprüche, **dadurch gekennzeichnet, dass** das Siegelwerkzeug (3, 13) ein zweites Werkzeugoberteil (B) aufweist, welches an der Siegelstation (3, 13) anstelle des ersten Werkzeugoberteils (A) wahlweise ein- und ausbaubar ist, wobei das zweite Werkzeugoberteil (B) mindestens einen Montagevorsprung (17b) aufweist, der mit der an der Siegelstation (3, 13) ausgebildeten Halterung (18) koppelbar ist, um das zweite Werkzeugoberteil (B) innerhalb der Siegelstation (3, 13) funktionsbereit zu lagern, und wobei der Montagevorsprung (17b) des zweiten Werkzeugoberteils (B) und der Montagevorsprung (17a) des ersten Werkzeugoberteils (A) identisch ausgebildet sind.

12. Verpackungsmaschine nach Anspruch 11, **dadurch gekennzeichnet, dass** das erste und das zweite Werkzeugoberteil (A, B) jeweils verschieden große Bauhöhen aufweisen.

13. Verpackungsmaschine nach einem der vorangehenden Ansprüche, **dadurch gekennzeichnet, dass** die Verpackungsmaschine in Form einer Schalenverschließmaschine (10) oder in Form einer Tiefziehverpackungsmaschine (1) ausgebildet ist.

14. Verfahren zum Evakuieren und/oder Begasen einer hermetisch abgedichteten Siegelkammer (3a), die an einer Siegelstation (3, 13) einer Verpackungsmaschine mittels eines Siegelwerkzeugs der Siegelstation (3 ,13) hergestellt wird, **dadurch gekennzeichnet, dass** das Evakuieren und/oder Begasen der Siegelkammer (3a) über einen Evakuierungs- und/oder Begasungsanschlusses (19a, 20a) durchgeführt wird, der an einem als Schiene entlang einer Außenseite eines ersten Werkzeugoberteils (A) gebildeten Montagevorsprung (17a) des Siegelwerkzeugs ausgebildet ist.

## Revendications

1. Machine d'emballage (1, 10) comprenant une station de scellage (3, 13) avec un outil de scellage qui comprend un premier outil supérieur (A) qui peut être monté de manière sélective sur la station de scellage (3, 13) ou retiré de la station de scellage (3, 13), dans laquelle le premier outil supérieur (A) comprend au moins un rebord de montage (17a) qui est configuré pour être couplé à un dispositif de maintien (18) de la station de scellage (3, 13) afin de positionner fonctionnellement le premier outil supérieur (A) à l'intérieur du poste de scellage (3, 13), dans lequel le rebord de montage (17a) comprend au moins une connexion d'évacuation et/ou de gazage (19a, 20a), **caractérisé en ce que** le rebord de montage (17a) est formé comme un rail le long d'un côté latéral du premier outil supérieur (A).

2. Machine d'emballage selon la revendication 1, **caractérisée en ce que** le rebord de montage (17a) est formé sur un côté arrière du premier outil supérieur (A), le côté arrière étant opposé à un côté avant du premier outil supérieur, qui fait face à un technicien ou à un dispositif d'assemblage.

3. Machine d'emballage selon l'une des revendications précédentes, **caractérisée en ce que** le dispositif de maintien (18) comprend un raccord d'évacuation et/ou de gazage pour le raccord d'évacuation et/ou de gazage (19a, 20a) qui est formé sur le rebord de montage (17a).

4. Machine d'emballage selon l'une des revendications précédentes, **caractérisée en ce que** le premier outil supérieur (A) comprend des rails de guidage latéraux (22a) auxquels sont couplés, pour le montage du premier outil supérieur (A) à l'intérieur de la station de scellage (3, 13), des dispositifs de maintien (23a, 23b) prévus respectivement à l'intérieur de la station de scellage (3, 13).

5. Machine d'emballage selon la revendication 4, **caractérisée en ce que** les rails de guidage latéraux (22a) sont chacun formés le long de côtés latéraux opposés du premier outil supérieur (A).

6. Machine d'emballage selon la revendication 4 ou la revendication 5, **caractérisée en ce que** les rails de guidage latéraux (22a) sont formés d'un seul tenant avec le rebord de montage (18), leurs extrémités s'étendant vers le rebord de montage (17a).

7. Machine d'emballage selon l'une des revendications 4 à 6, **caractérisée en ce que** le rebord de montage (17a) et les rails de guidage latéraux (22a) sont formés de manière circonférentielle le long de différents côtés latéraux du premier outil supérieur (A).

8. Machine d'emballage selon la revendication 7, **caractérisée en ce que** le rebord de montage (17a) et les rails de guidage latéraux (22a) forment plus ou moins un rebord de montage en forme de U au niveau du premier outil supérieur (A).

9. Machine d'emballage selon la revendication 4, **caractérisée en ce que** l'un des rails de guidage latéraux (22a) forme le rebord de montage (17a).

10. Machine d'emballage selon l'une des revendications précédentes, **caractérisée en ce que** le rebord de montage (17a) comprend au moins un raccord d'eau de refroidissement (21a).

11. Machine d'emballage selon l'une des revendications précédentes, **caractérisée en ce que** l'outil de scellage comprend un second outil supérieur (B) qui peut être sélectivement monté sur le poste de scellage (3, 13) et retiré du poste de scellage (3, 13), respectivement, à la place du premier outil supérieur (A), le second outil supérieur (B) présentant au moins un rebord de montage (17b) qui peut être couplé au dispositif de maintien (18) du poste de scellage (3, 13) afin de positionner de manière fonctionnelle le second outil supérieur (B) à l'intérieur du poste de scellage (3, 13), et le rebord de montage (17b) du second outil supérieur (B) et le rebord de montage (17a) du premier outil supérieur (A) étant identiques l'un à l'autre.

12. Machine d'emballage selon la revendication 11, **caractérisée en ce que** le premier outil supérieur (A) et le second outil supérieur (B) comprennent des hauteurs de construction différentes l'un par rapport à l'autre.

13. Machine d'emballage selon l'une des revendications précédentes, **caractérisée en ce que** la machine d'emballage est prévue sous la forme d'une operculeuse (10) ou sous la forme d'une emboutisseuse thermique (1).

14. Procédé d'évacuation et/ou de gazage d'une chambre de scellage (3a) fermée hermétiquement qui est établie à une station de scellage (3, 13) d'une machine d'emballage (1, 10) au moyen d'un outil de scellage de la station de scellage (3, 13), **caractérisé en ce que** l'évacuation et/ou le gazage de la chambre de scellage (3a) est effectué par l'intermédiaire d'une connexion d'évacuation et/ou de gazage (19a, 20a) qui est formée au niveau d'un rebord de montage (17a) étant formé comme un rail le long d'un côté latéral d'un premier outil supérieur (A) de l'outil de scellage.
